# FASCICULE DE BREVET EUROPEEN

(11) **EP 1 597 209 B1**
(45) Date de publication et mention de la délivrance du brevet: **22.05.2013**
(21) Numéro de dépôt: 04707957.9
(22) Date de dépôt: 04.02.2004
(51) Int. Cl.: C03B 37/08, C03B 37/083

(54) **DISPOSITIF DE RENFORT POUR FILIERE DELIVRANT DES FILAMENTS DE VERRE**
BEWEHRUNGSVORRICHTUNG FÜR ZIEHEISEN ZUR HERSTELLUNG VON GLASFILAMENTEN
REINFORCING DEVICE FOR BUSHING USED TO PRODUCE GLASS-BASED FILAMENTS

(30) Priorité: 12.02.2003 FR 0301851
(43) Date de publication de la demande: 23.11.2005
(73) Titulaire: Saint-Gobain Adfors, 73000 Chambéry (FR)
(72) Inventeur: RENAUDIN, Jean-Pierre, F-73160 St-Sulpice (FR); THIRIET, Jean-Louis, F-73000 Chambéry (FR)
(74) Mandataire: Aupetit, Muriel J. C.
(86) Numéro de dépôt international: PCT/FR2004/000255
(87) Numéro de publication internationale: WO 2004/074195

(56) Documents cités:
- FR-A- 2 334 637
- US-A- 2 777 254
- US-A- 3 920 430
- US-A1- 2003 000 259
- PATENT ABSTRACTS OF JAPAN vol. 007, no. 039 (C-151), 17 février 1983 (1983-02-17) & JP 57 191245 A (NIHON GLASS SENI KK), 25 novembre 1982 (1982-11-25)

## Description

L'invention concerne une installation de fibrage délivrant des fibres de verre, et plus particulièrement le renfort mécanique de l'un des éléments de l'installation de fibrage.

De manière classique, une installation de fibrage comporte un bloc de prise de verre (flow block) qui reçoit du verre fondu issu d'un canal relié au four dans lequel est obtenue la fusion du verre, un bloc intermédiaire (bushing block) et une filière (bushing). La filière est munie en fond d'une plaque pourvue d'une multitude d'orifices depuis lesquels s'écoule le verre fondu pour être étiré en une multiplicité de filaments.

Ces filaments dont le diamètre peut varier de 5 à 33 µm sont rassemblés en au moins une nappe qui converge vers un dispositif d'assemblage pour former au moins une mèche et être par exemple bobinée. Selon sa destination, la mèche peut aussi être coupée (fils coupés) ou projetée sur un tapis (mats à fils continus).

Les produits obtenus sont utilisés principalement dans diverses applications de renforcement.

La filière est fabriquée en alliage de platine et de rhodium, matériaux électriquement conducteurs et résistants dans le temps à de très hautes températures. Cette filière est chauffée par effet Joule pour maintenir à une certaine température, de l'ordre de 1100 à 1400°C, le verre contenu dans le bloc afin qu'il reste à l'état fondu pour être étiré depuis les orifices du fond de filière. Le chauffage de la filière est réalisé à partir d'un transformateur électrique par la connexion de deux terminaux situés chacun sur chacune des extrémités opposées de la filière, à des éléments de connexion électrique extérieurs à la filière.

Les terminaux de la filière, sont rapportés par soudage contre les parois latérales de la filière. Ils font saillie pour être raccordés aux éléments de connexion extérieurs.

A l'intérieur de la filière, dans un plan sensiblement parallèle au fond de la filière et du côté du bloc intermédiaire, est disposée une grille destinée à conditionner thermiquement le verre et à absorber une partie de la pression hydrostatique exercée par le verre fondu.

Le verre fondu exerce contre les côtés, la grille et le fond de la filière de fortes contraintes, de l'ordre de 6000 Pa. Au cours du temps, ces contraintes, associées à la chaleur, tendent à déformer le fond, la grille et les côtés de la filière. En outre, les éléments extérieurs de connexion électrique reliés aux terminaux de la filière y sont suspendus, exerçant une force mécanique de traction supplémentaire sur la filière ce qui constitue également une cause de déformation de la filière au cours du temps.

Au cours du temps, le fluage à chaud des matériaux constitutifs de la filière, combiné avec la pression hydrostatique du verre fondu, tend à déformer le fond, la grille et les côtés, ayant pour conséquence des problèmes de qualité, de régularité du titre de la mèche et de rendement.

Les forces de traction (poids) des éléments suspendus, ainsi que la dilatation linéaire des parois de la filière, induisent également de fortes contraintes mécaniques.

De manière à s'opposer en partie à la déformation de la filière, il est connu d'ajouter dans la partie supérieure du fond de la filière et entre ses côtés une pluralité d'éléments de renfort parallèles les uns aux autres et disposés dans des plans transversaux au plan du fond de filière et de manière transversale aux plus grands côtés de la filière. Dans la suite de la description, les termes supérieur et inférieur sont définis par rapport au sens de coulée du verre à travers la filière, le verre étant étiré depuis la partie supérieure vers la partie inférieure.

Le brevet américain US 3 920 430 divulgue un tel élément ou dispositif de renfort qui permet d'améliorer la résistance à son fléchissement tout en n'augmentant pas le poids de platine ou platine allié nécessaire à sa constitution grâce en outre à un barreau en céramique disposé à l'intérieur de l'élément de renfort.

En effet, dans ce document, l'élément de renfort constitué d'une barre longitudinale est creux et loge un barreau en céramique qui dépasse à chacune des extrémités de la barre de renfort et qui est ancré dans le béton d'empaquetage de la filière. Ce document insiste sur le fait que le barreau est agencé dans la partie supérieure de la barre de renfort, appuyant sur la paroi interne supérieure de la barre et laissant un espace vide dans la partie inférieure de la barre.

Cependant, cette barre de renfort, du fait en particulier de l'espace vide interne en partie inférieure, ne résiste pas suffisamment au fléchissement. Et du fait de la température de fluage du platine, la barre se déforme, sa partie inférieure s'affaisse et les efforts de poussée exercés par le verre sur le fond de la filière finissent par le déformer.

Par ailleurs, on connaît de l'abrégé du document JP 57191245 un fond de filière pourvu d'un dispositif de renfort constitué par un barreau de céramique recouvert par du platine. Mais la sublimation du platine au cours du temps risque de polluer la céramique, ce qui rendra notamment très difficile le recyclage du dispositif de renfort.

L'invention a donc pour but de fournir un dispositif de renfort permettant d'améliorer la résistance au fléchissement résultant du fluage de l'alliage, et de stabiliser au cours du temps de fonctionnement son niveau thermique.

Le dispositif de renfort de l'invention, pour un fond de filière comportant une multitude d'orifices depuis lesquels sont étirés des filaments de verre, comportant un pièce de renfort, qui comprend une première partie creuse définissant au moins un logement d'accueil et une seconde partie qui s'étend au moins en partie sur la longueur de la partie creuse, ainsi qu'au moins un élément raidisseur inséré dans le logement d'accueil de la partie creuse, la section de l'élément raidisseur étant sensiblement identique à la section interne de la partie creuse, comporte un matériau supplémentaire réfractaire disposé dans le logement d'accueil de la partie creuse entre l'élément raidisseur et les parois internes de la partie creuse de façon à combler les espaces restants à la manière d'un joint. Ce matériau supplémentaire réfractaire est de préférence un isolant plastique réfractaire.

Avantageusement, l'élément raidisseur est constitué d'au moins un matériau dont la résistance au fluage à chaud est supérieure à la résistance au fluage à chaud du matériau constitutif de la partie creuse. Ce matériau peut être de type céramique telle que de l'alumine qui présente une pureté au moins égale à 99,5 % et de préférence de 99,7 à 99,8 %. Ce matériau peut également être un alliage ODS à base de fer, ou de nickel ou de titane.

Selon une autre caractéristique du dispositif, la partie creuse présente une forme oblongue s'étendant selon une seule direction, ou bien elle peut plutôt présenter une forme à la manière d'un V retourné, comportant deux portions s'étendant selon deux directions distinctes et étant aboutées dans un plan de jonction. Dans cette dernière variante, les deux portions de l'élément creux constituent respectivement deux logements d'accueil dans chacun desquels est inséré au moins un élément raidisseur.

Selon une autre caractéristique, la partie creuse est constituée d'une seule pièce, ou bien dans la variante des deux portions de la partie creuse, il peut s'agir de deux pièces rendues solidaires.

Selon encore une autre caractéristique, la partie creuse présente une section de forme carrée, rectangulaire, ronde, ovale, triangulaire ou trapézoïdale.

De préférence, la pièce de renfort du dispositif est constituée d'un alliage de platine.

Enfin, le corps de la pièce de renfort comporte de préférence une troisième partie opposée à la deuxième partie et s'étendant au moins en partie sur la longueur de la partie creuse.

Selon l'invention, au moins un dispositif de renfort peut être avantageusement utilisé dans une filière, le ou les dispositifs de renfort s'étendant dans un plan transversal aux plus grands côtés de la filière, et les extrémités du ou des éléments raidisseurs dépassant de la partie creuse et étant solidaires du béton d'empaquetage de la filière, l'ensemble formant ainsi un bloc indéformable.

Selon une caractéristique, le dispositif est rendu solidaire du fond par la fixation de l'extrémité libre longitudinale de la deuxième partie de la pièce de renfort et des extrémités libres latérales de la partie creuse de la pièce de renfort.

Selon une autre caractéristique, la filière comporte une grille agencée au-dessus du ou des dispositifs de renfort, la troisième partie de la pièce de renfort étant rendue solidaire de la grille.

D'autres avantages et caractéristiques de l'invention vont à présent être décrits plus en détail en regard des dessins annexés sur lesquels :
- La figure 1 illustre une vue partielle d'un fond de filière auquel sont associés une pluralité de dispositifs de renfort de l'invention ;
- La figure 2 montre une vue de profil d'un dispositif de renfort de l'invention ;
- Les figures 3 et 4 sont des variantes de la figure 2 ;
- La figure 5 est une vue en coupe de diverses formes de dispositif de renfort associé au fond de filière et à la grille de la filière.

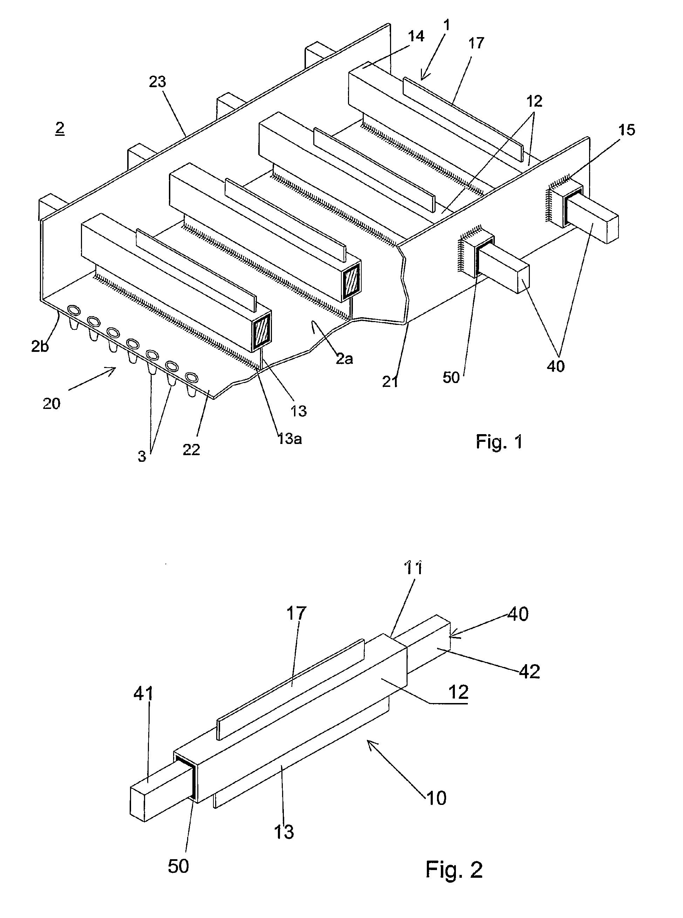

Sur la figure 1 sont illustrés plusieurs dispositifs de renfort 1 de l'invention qui sont associés à une plaque 20 d'un fond 2 d'une filière non détaillée et destinée à faire partie d'une installation de fibrage apte à délivrer à partir, par exemple de verre fondu, des filaments de verre.

Le fond 2 comporte une plaque 20 rectangulaire présentant des côtés opposés 21 qu'on nommera grands côtés et des côtés plus petits 22 perpendiculaires à ces grands côtés qu'on nommera petits côtés. Les grands côtés 21 sont pourvus de flasques 23 perpendiculaires s'étendant depuis la face supérieure 2a de la plaque 20.

Sur la face inférieure 2b de la plaque 20 sont agencés des tétons 3 qui sont percés et depuis lesquels le verre est étiré en filaments.

Les dispositifs 1 sont disposés de manière à être intercalés entre les rangées de tétons pour ne pas s'opposer à l'écoulement du verre au travers de ces derniers, par exemple entre deux doubles-rangées.

Chaque dispositif de renfort 1 tel qu'illustré en détail sur les figures 2 à 4 comporte une pièce de renfort 10 et au moins un élément raidisseur 40.

La pièce de renfort 10 comprend un corps 1 longitudinal qui comporte une première partie creuse 12 centrale et une seconde partie 13 inférieure qu'on nommera la jupe et qui s'étend sur tout ou partie de la longueur de la partie creuse 12.

Le dispositif est associé au fond 2 de manière que le corps 11 s'étende selon une direction transversale aux grands côtés 21, les extrémités libres latérales opposées 14 et 15 de la partie creuse étant rendues solidaires des flasques 23 et dépassant de ces flasques, et l'extrémité longitudinale 13a de la jupe 13 du corps étant solidarisée à la face supérieure 2a de la plaque 20.

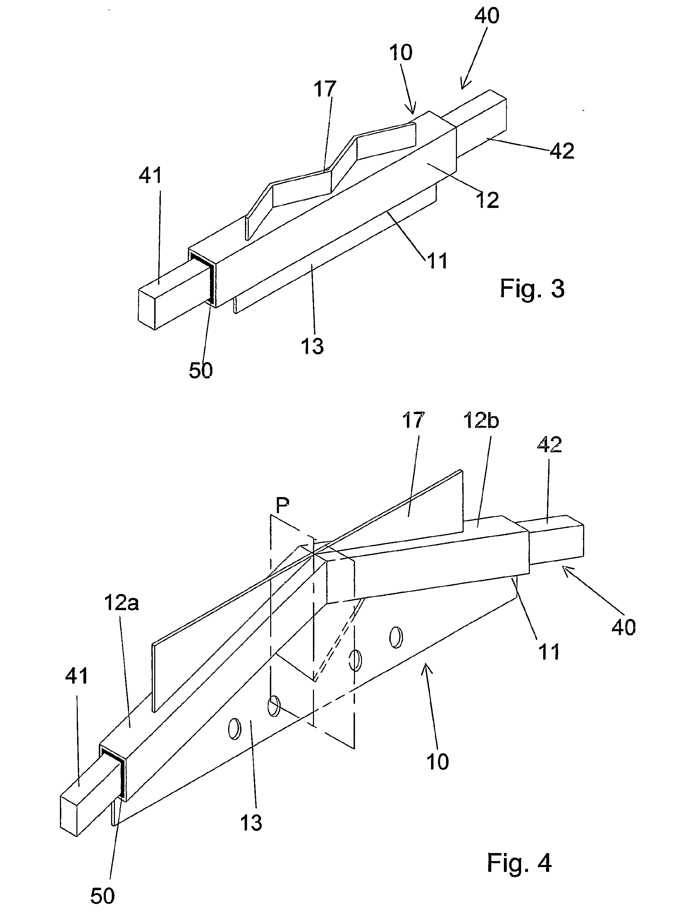

Pour limiter le poids de la pièce de renfort, la jupe 13 peut être avantageusement percée de trous (figure 4) ou bien constituée de plusieurs parties espacées sur la longueur de la partie creuse 12 (non illustré).

La partie creuse centrale 12 de la pièce de renfort définit au moins un logement d'accueil pour au moins un élément raidisseur 40, les extrémités 41, 42 dudit élément après son insertion dépassant des extrémités latérales respectives 14 et 15 de la partie creuse.

Les extrémités 41, 42 de l'élément raidisseur sont ancrées dans le béton d'empaquetage de la filière (non illustré). Il en résulte la solidarisation complète de l'ensemble formé par la filière et par le béton d'empaquetage qui lui aussi est indéformable.

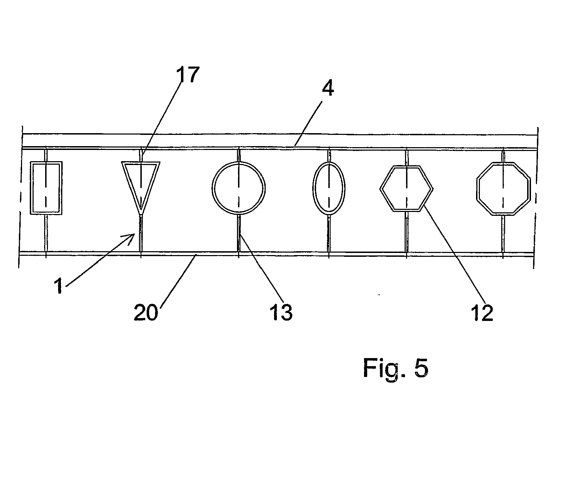

La partie creuse 12 peut présenter des sections de formes diverses (figure 5), par exemple carrée, rectangulaire, ronde, ovale, triangulaire ou trapézoïdale, l'élément raidisseur 40 présentant de préférence une section sensiblement identique à la section interne de la partie creuse pour son insertion ajustée dans le logement.

La partie creuse 12 peut s'étendre selon une seule direction, comme représenté sur les figures 2 et 3. Un seul élément raidisseur 40, qui se présente sous la forme d'un barreau de section sensiblement identique, est alors agencé dans le logement d'accueil.

En variante (figure 4), la partie creuse 12 peut s'étendre selon deux directions qui se croisent en partie supérieure du corps, à l'opposé de la jupe 13, et dans un plan de jonction P, pour constituer deux portions 12a et 12b, l'ensemble présentant ainsi une section en forme d'un V renversé à la manière d'une charpente de toit qui présente de manière bien connue une meilleure résistance au fléchissement.

Cette configuration est réalisée en une seule pièce ou bien en au moins deux pièces soudées selon le plan de jonction P. Dans cette variante, les portions 12a et 12b font place à au moins deux logements d'accueil pour respectivement deux éléments raidisseurs 40, les extrémités des éléments raidisseurs 40 au niveau du plan P devant être jointives sur toute leur surface.

Le corps 11 de la pièce de renfort 10 est constitué d'un matériau en platine allié, similaire ou non au fond de filière, tandis que l'élément raidisseur 40 est constitué d'un matériau autre que le platine et dont la résistance au fluage à chaud est supérieure à la résistance au fluage à chaud du matériau constitutif de la pièce de renfort. Le dispositif de renfort est ainsi moins lourd que si la partie 12 centrale était pleine et en platine.

Le matériau de l'élément raidisseur 40 peut être un matériau de type céramique tel que de l'alumine, du nitrure de silicium, de la zircone, ou bien de type alliage ODS (Oxyde Dispersion Strengthened) à base de nickel, ou de fer ou de titane, ou encore de type alliage réfractaire à base notamment de tungstène, ou de molybdène ou de niobium mais ce type d'alliage est de prix élevé.

Le matériau de type céramique présente l'avantage de ne pas former d'eutectique avec le platine.

Le matériau de type alliage ODS présente l'avantage de pouvoir être utilisé à de très hautes températures, de l'ordre de 1500 à proche de 1700 °C. Selon l'invention, il est prévu un matériau supplémentaire réfractaire 50 qui est introduit dans les espaces restants entre les parois internes de la partie 12 et l'élément raidisseur 40 après son logement, à la manière d'un joint de façon à immobiliser l'élément raidisseur 40 dans son logement et à interdire toute déformation de la partie creuse 12. Ce matériau 50 est par exemple un isolant plastique réfractaire, tel que le matériau Réfractol® de la société Réfractol.

Ainsi, il y a une totale rigidité de l'ensemble de la pièce de renfort, sans risque comme dans l'art antérieur d'une déformation de la pièce de renfort creuse autour du barreau intérieur provoquant un abaissement de la jupe et une déformation du fond. En outre, aucun espace à l'intérieur de la partie creuse 12 n'est présent, ce qui empêche, contrairement à l'art antérieur, une sublimation du platine sur l'élément raidisseur. Ainsi, les pertes de platine sont minimisées, entraînant des gains de coût lors du recyclage du platine après la fin de fonctionnement de la filière.

La fixation du corps 11 au fond de filière 2 est réalisée par soudage, d'une part en solidarisant l'extrémité longitudinale 13a de la partie inférieure contre la face supérieure 2a du fond, et d'autre part en solidarisant les extrémités libres latérales opposées 14 et 15 de la partie creuse, à travers les flasques 23.

De manière optionnelle et préférentielle, le corps 11 comprend une troisième partie 17 supérieure agencée à l'opposé de la partie inférieure 12 et s'étendant sur tout ou partie de la longueur de la partie creuse 12. Cette partie supérieure 17 permet de soutenir la grille 4 de la filière et à en éviter la déformation. La fixation entre cette partie supérieure 17 et la grille se fait spontanément par diffusion métallique pendant le fonctionnement de la filière (dès la mise en chauffe et pendant les premiers jours de fonctionnement).

Cette fixation supplémentaire en partie supérieure assure ainsi une solidarisation complète de tous les éléments de la filière.

La filière constitue alors un bloc rigide indéformable. L'image thermique et la perte de charge sont conservées. La conduite de la filière en est facilitée, évitant notamment les interruptions du procédé de fibrage pour réglage. Le produit obtenu est de qualité constante dans le temps et le rendement de fabrication est plus élevé.

## Revendications

1. Dispositif de renfort (1), pour un fond de filière comportant une multitude d'orifices depuis lesquels sont étirés des filaments de verre, comportant une pièce de renfort (10), qui comprend une première partie (12) creuse définissant au moins un logement d'accueil et une seconde partie (13) qui s'étend au moins en partie sur la longueur de la partie creuse (12), ainsi qu'au moins un élément raidisseur (40) inséré dans le logement d'accueil de la partie creuse, **caractérisé en ce que** la section de l'élément raidisseur (40) est sensiblement identique à la section interne de la partie creuse (12) et le dispositif comporte un matériau supplémentaire réfractaire (50) disposé dans le logement d'accueil de la partie creuse (12) entre l'élément raidisseur (40) et les parois internes de la partie creuse de façon à combler les espaces restants à la manière d'un joint.

2. Dispositif selon la revendication 1, **caractérisé en ce que** le matériau supplémentaire réfractaire (50) est un isolant plastique réfractaire.

3. Dispositif selon l'une des revendications 1 à 2, **caractérisé en ce que** l'élément raidisseur (40) est constitué d'au moins un matériau dont la résistance au fluage à chaud est supérieure à la résistance au fluage à chaud du matériau constitutif de la partie creuse (12).

4. Dispositif selon la revendication 3, **caractérisé en ce que** le matériau de l'élément raidisseur (40) est de type céramique.

5. Dispositif selon la revendication 4, **caractérisé en ce que** le matériau de l'élément raidisseur est de l'alumine qui présente une pureté au moins égale à 99,5 %, et de préférence de 99,7 à 99,8 %.

6. Dispositif selon la revendication 3, **caractérisé en ce que** le matériau de l'élément raidisseur (40) est de type alliage ODS à base de fer, ou de nickel ou de titane.

7. Dispositif selon l'une quelconque des revendications précédentes, **caractérisé en ce que** la partie creuse (12) présente une forme oblongue s'étendant selon une seule direction.

8. Dispositif selon l'une quelconque des revendications 1 à 6, **caractérisé en ce que** la partie creuse (12) présente une forme à la manière d'un V retourné, comportant deux portions (12a, 12b) s'étendant selon deux directions distinctes et étant aboutées dans un plan de jonction (P).

9. Dispositif selon la revendication 8, **caractérisé en ce que** les deux portions (12a, 12b) de l'élément creux constituent respectivement deux logements d'accueil dans chacun desquels est inséré au moins un élément raidisseur (40).

10. Dispositif selon une quelconque des revendications précédentes, **caractérisé en ce que** la partie creuse (12) est constituée d'une seule pièce.

11. Dispositif selon la revendication 8 ou 9, **caractérisé en ce que** les deux portions (12a, 12b) de la partie creuse (12) sont respectivement constituées de deux pièces rendues solidaires.

12. Dispositif selon l'une quelconque des revendications précédentes, **caractérisé en ce que** la partie creuse (12) présente une section de forme carrée, rectangulaire, ronde, ovale, triangulaire ou trapézoïdale.

13. Dispositif selon l'une quelconque des revendications précédentes, **caractérisé en ce que** la pièce de renfort (10) est constituée d'un alliage de platine.

14. Dispositif selon l'une des revendications précédentes, **caractérisé en ce que** le corps (11) de la pièce de renfort comporte une troisième partie (17) opposée à la deuxième partie (13) et s'étendant au moins en partie sur la longueur de la partie creuse (12).

15. Filière délivrant des filaments en verre comportant un fond (2) pourvu d'orifices (3) depuis lesquels s'écoulent les filaments et au moins un dispositif de renfort (1) selon l'une quelconque des revendications 1 à 14, le ou les dispositifs de renfort s'étendant dans un plan transversal aux plus grands côtés (21) de la filière, et les extrémités du ou des éléments raidisseurs (40) dépassant de la partie creuse (12) et étant solidaires du béton d'empaquetage de la filière.

16. Filière comportant au moins un dispositif de renfort (1) selon la revendication 15, **caractérisée en ce que** le dispositif (1) est rendu solidaire du fond (2) par la fixation de l'extrémité libre longitudinale (13a) de la deuxième partie (13) de la pièce de renfort (10) et des extrémités libres latérales (14, 15) de la partie creuse (12) de la pièce de renfort.

17. Filière selon la revendication 14 et 15, **caractérisée en ce qu'**elle comporte une grille (4) agencée au-dessus du ou des dispositifs de renfort (1), la troisième partie (17) de la pièce de renfort étant rendue solidaire de la grille.

## Patentansprüche

1. Verstärkungsvorrichtung (1) für einen Düsenboden mit einer Vielzahl von Öffnungen, aus denen Glasfilamente gezogen werden, umfassend ein Verstärkungsteil (10), das einen ersten hohlen Teil (12), der wenigstens eine Aufnahme definiert, und einen zweiten Teil (13), der sich wenigstens teilweise über die Länge des hohlen Teils (12) erstreckt, sowie wenigstens ein Versteifungselement (40), das in die Aufnahme des hohlen Teils eingefügt ist, umfasst, **dadurch gekennzeichnet, dass** der Querschnitt des Versteifungselements (40) mit dem Innenquerschnitt des hohlen Teils (12) im Wesentlichen identisch ist und die Vorrichtung ein zusätzliches feuerfestes Material (50) umfasst, das in der Aufnahme des hohlen Teils (12) zwischen dem Versteifungselement (40) und den Innenwänden des hohlen Teils angeordnet ist, um die verbleibenden Räume nach Art einer Dichtung auszufüllen.

2. Vorrichtung nach Anspruch 1, **dadurch gekennzeichnet, dass** das zusätzliche feuerfeste Material (50) ein feuerfestes Kunststoffisoliermaterial ist.

3. Vorrichtung nach einem der Ansprüche 1 bis 2, **dadurch gekennzeichnet, dass** das Versteifungselement (40) aus wenigstens einem Material besteht, dessen Warmkriechfestigkeit höher als die Warmkriechfestigkeit des den hohlen Teil (12) bildenden Materials ist.

4. Vorrichtung nach Anspruch 3, **dadurch gekennzeichnet, dass** das Material des Versteifungselements (40) vom keramischen Typ ist.

5. Vorrichtung nach Anspruch 4, **dadurch gekennzeichnet, dass** das Material des Versteifungselements Aluminiumoxid ist, das eine Reinheit von wenigstens gleich 99,5 % und vorzugsweise von 99,7 bis 99,8 % aufweist.

6. Vorrichtung nach Anspruch 3, **dadurch gekennzeichnet, dass** das Material des Versteifungselements (40) vom Typ ODS-Legierung auf Eisen- oder Nickel- oder Titanbasis ist.

7. Vorrichtung nach einem der vorstehenden Ansprüche, **dadurch gekennzeichnet, dass** der hohle Teil (12) eine sich in einer einzigen Richtung erstreckende längliche Form aufweist.

8. Vorrichtung nach einem der Ansprüche 1 bis 6, **dadurch gekennzeichnet, dass** der hohle Teil (12) eine Form nach Art eines umgedrehten V aufweist, das zwei Abschnitte (12a, 12b) umfasst, die in zwei unterschiedliche Richtungen verlaufen und die in einer Verbindungsebene (P) stumpf aneinander gefügt sind.

9. Vorrichtung nach Anspruch 8, **dadurch gekennzeichnet, dass** die beiden Abschnitte (12a, 12b) des hohlen Elements jeweils zwei Aufnahmen bilden, in denen jeweils wenigstens ein Versteifungselement (40) eingefügt ist.

10. Vorrichtung nach einem der vorstehenden Ansprüche, **dadurch gekennzeichnet, dass** der hohle Teil (12) von einem einzigen Teil gebildet ist.

11. Vorrichtung nach Anspruch 8 oder 9, **dadurch gekennzeichnet, dass** die beiden Abschnitte (12a, 12b) des hohlen Teils (12) jeweils von zwei fest miteinander verbundenen Teilen gebildet sind.

12. Vorrichtung nach einem der vorstehenden Ansprüche, **dadurch gekennzeichnet, dass** der hohle Teil (12) einen Querschnitt mit quadratischer, rechteckiger, runder, ovaler, dreieckiger Form oder Trapezform aufweist.

13. Vorrichtung nach einem der vorstehenden Ansprüche, **dadurch gekennzeichnet, dass** das Verstärkungsteil (10) aus einer Platinlegierung besteht.

14. Vorrichtung nach einem der vorstehenden Ansprüche, **dadurch gekennzeichnet, dass** der Körper (11) des Verstärkungsteils einen dritten Teil (17) umfasst, der dem zweiten Teil (13) gegenüber liegt und der sich wenigstens teilweise über die Länge des hohlen Teils (12) erstreckt.

15. Glasfilamente bereitstellende Düse, umfassend einen Boden (2), der mit Öff nungen (3) versehen ist, aus denen die Filamente fließen, und wenigstens eine Verstärkungsvorrichtung (1) nach einem der Ansprüche 1 bis 14, wobei sich die Verstärkungsvorrichtung oder -vorrichtungen in einer zu den längsten Seiten (21) der Düse querverlaufenden Ebene erstrecken und wobei die Enden des oder der Versteifungselemente(s) (40) über den hohlen Teil (12) vorstehen und mit dem Hüllbeton der Düse fest verbunden sind

16. Düse mit wenigstens einer Verstärkungsvorrichtung (1), nach Anspruch 15, **dadurch gekennzeichnet, dass** die Vorrichtung (1) durch die Befestigung des freien Längsendes (13a) des zweiten Teils (13) des Verstärkungsteils (10) und der freien Seitenenden (14, 15) des hohlen Teils (12) des Verstärkungsteils mit dem Boden (2) fest verbunden ist.

17. Düse nach Anspruch 14 und 15, **dadurch gekennzeichnet, dass** sie ein Gitter (4) umfasst, das oberhalb der Verstärkungsvorrichtung oder -vorrichtungen (1) angeordnet ist, wobei der dritte Teil (17) des Verstärkungsteils mit dem Gitter fest verbunden ist.

## Claims

1. Reinforcement device (1), for the bottom of a bushing having a multitude of holes from which glass filaments are drawn, comprising a reinforcement piece (10) that comprises a hollow first part (12) defining at least one receiving housing and a second part (13) that extends at least partly over the length of the hollow part (12), and also at least one stiffener (40) inserted into the receiving housing of the hollow part, **characterized in that** the cross section of the stiffener (40) is substantially identical to the internal cross section of the hollow part (12) and the device includes a refractory additional material (50) placed in the receiving housing of the hollow part (12) between the stiffener (40) and the internal walls of the hollow part so as to fill the remaining spaces in the manner of a seal.

2. Device according to Claim 1, **characterized in that** the refractory additional material (50) is a refractory plastic insulator.

3. Device according to either of Claims 1 and 2, **characterized in that** the stiffener (40) is made of at least one material whose hot creep resistance is greater than the hot creep resistance of the material of which the hollow part (12) is made.

4. Device according to Claim 3, **characterized in that** the material of the stiffener (40) is of the ceramic type.

5. Device according to Claim 4, **characterized in that** the material of the stiffener is alumina with a purety of at least 99.5% and preferably 99.7 to 99.8%.

6. Device according to Claim 3, **characterized in that** the material of the stiffener (40) is of the iron-based or nickel-based or titanium-based ODS alloy type.

7. Device according to any one of the preceding claims, **characterized in that** hollow part (12) has an oblong shape that extends along a single direction.

8. Device according to any one of Claims 1 to 6, **characterized in that** the hollow part (12) has a shape in the manner of an upside down V, comprising two portions (12a, 12b) extending along two different directions and coming into abutment in a joint plane (P).

9. Device according to Claim 8, **characterized in that** the two portions (12a, 12b) of the hollow element constitute two respective receiving housings into each of which at least one stiffener (40) is inserted.

10. Device according to any one of the preceding claims, **characterized in that** the hollow part (12) is made of a single piece.

11. Device according to Claim 8 or 9, **characterized in that** the two portions (12a, 12b) of the hollow part (12) are made from two respective pieces fastened together.

12. Device according to any one of the preceding claims, **characterized in that** the hollow part (12) has a cross section of square, rectangular, round, oval, triangular or trapezoidal shape.

13. Device according to any one of the preceding claims, **characterized in that** the reinforcement piece (10) is made of a platinum alloy.

14. Device according to one of the preceding claims, **characterized in that** the body (11) of the reinforcement piece has a third part (17) on the opposite side from the second part (13) and extending at least partly over the length of the hollow part (12).

15. Bushing delivering glass filaments, comprising a bottom (2) provided with holes (3) from which the filaments flow and at least one reinforcement device (1) according to any one of Claims 1 to 14, the reinforcement device or devices extending in a plane transverse to the longest sides (21) of the bushing, and the ends of the stiffener or stiffeners (40) extending from the hollow part (12) and being fastened into the concrete for packing the bushing.

16. Bushing comprising at least one reinforcement device (1) according to Claim 15, **characterized in that** the device is attached to the bottom (2) by attaching the longitudinal free end (13a) of the second part (13) of the reinforcement piece (10) and the lateral free ends (14, 15) of the hollow part (12) of the reinforcement piece.

17. Bushing according to Claim 14 or 15, **characterized in that** it includes a screen (4) placed on top of the reinforcement device or devices (1), the third part (17) of the reinforcement piece being fastened to the screen.
